# EUROPEAN PATENT SPECIFICATION

(11) **EP 1 114 716 B1**
(45) Date of publication and mention of the grant of the patent: **21.07.2004**
(21) Application number: 00128068.4
(22) Date of filing: 21.12.2000
(51) Int. Cl.: B29C 70/60, B29C 39/12, B44F 9/04, C08K 3/36, C08L 33/12

(54) **Moulded articles having a high filler content and preparation process thereof**
Formkörper mit hohem Füllmittelgehalt und Herstellungsverfahren
Articles moulés ayant une teneur en charge elevée et procédé de fabrication

(30) Priority: 07.01.2000 IT MI200011
(43) Date of publication of application: 11.07.2001
(73) Proprietor: TELMA GUZZINI S.r.l., I-62010 Montelupone, (Macerata) (IT)
(72) Inventor: Guzzini, Mauro, 62019 Recanati (MC) (IT); Pianesi, Maria Savina, 62100 Macerata (IT); Rossini, Samuele, 60022 Castelfidardo (AN) (IT); Sempio, Carlo, 21052 Busto Arsizio (VA) (IT)
(74) Representative: Sama, Daniele, Dr.

(56) References cited:
- EP-A- 0 361 101
- WO-A-94/18270
- WO-A-96/16089
- FR-A- 2 682 117
- GB-A- 1 493 393
- US-A- 5 800 910
- US-A- 5 882 560

## Description

The present invention relates to moulded articles based on (meth)acrylic resins, usable as sinks, kitchen work tops, hobs, etc.

Specifically the invention relates to moulded articles based on (meth)acrylic dispersions having a high content of milled quartzes, endowed with a high scratch resistance combined with an improved resistance to discolouration when they are subjected to the alternated use of hot and cold water during the use as defined hereunder.

It is known that in the field of kitchen sinks the research target is the global improvement of the surface and functional properties. In particular over the last few years it has been tried to improve the scratch resistance caused by the metals of the kitchen under the form of knifes, pot surfaces or other articles used in the food preparation. For this purpose sinks based on dispersions of methacrylic resins having a high content of natural quartzes (about 75% by weight) having a rounded shape and coloured by resins and/or dyes, have been commercialized. Said sinks are described in US-A-5218013 which describes unbroken particles of mineral filler, therefore unmilled and with rounded edges. The filler has sizes in the range from about 0.1 mm to 2 mm and forms about 50-85% by weight of the dispersion. In this case using filler particles having the above indicated high sizes, a visible rougher surface is obtained, since during the polymerization the resin more markedly shrinks in the sink surface zone among the large filler particles. As a consequence microscopic hollows form on the visible surface which allow the filler particles to stand out and consequently a so made rough surface better hides scratches, avoiding the black scratches. The patent relates also to a process for the production of the manufactured article in which gravity is utilized in order to obtain a greater concentration of the filler on the visible surface, the one which results more subjected to stresses. Notwithstanding the sinks obtained by these dispersions have a high scratch resistance, show a tendency to discolouration when they are subjected to the alternated use of hot and cold water during the use.

A system for obtaining sinks having improved resistance to hot/cold cycles is described in the patent application WO-A-9310182, wherein dispersions of methacrylic resins are used, having a high silica content, about 20-80% by volume, having particles with an average size lower than 50 *µ*m and a surface area BET lower than 30 m²/cm³. Said dispersions contain a considerable amount of a functionalized polymer of elastomeric type. In particular these elastomers are vinylaromatic/conjugated dienes or acrylonitrile/conjugated dienes functionalized copolymers which incorporated as additives in curable compositions allow to obtain finished manufactured articles having an improved thermal resistance, i.e. an improved resistance to the above mentioned thermal shock tests. However these compositions give rise to serious moulding problems caused by the rubber present in the formulation, which dirties the moulds and appears on the surface of the manufactured articles. Besides, the sinks described in this patent have not a rough surface and they do not show high scratch resistance.

Patent application WO 93/10183 solves the same technical problem indicated in patent application WO 93/10182 with the difference that it uses a non functionalized polymer of elastomeric type, for example vinylaromatic/conjugated dienes or acrylonitrile/conjugated dienes non functionalized copolymers.

WO-A-9616089 discloses a casting polymerizable composition comprising a quartz sand. The quartz sand particle consists in the core of quarz and at the surface essentially of α-cristobalite. The size of the granules is comprised from 100 µm to 500 µm.

US-A-5800910 discloses plastic molded articles comprising a polymer matrix containing inorganic fillers, wherein the filler comprises two fractions (a) and (b), fraction (a) having a particle size distribution with 98% by weight of the particles ≤ 150 µm and is distributed essentially uniformly in the polymer matrix, fraction (b) having particle size from 300 µm to 3000 µm, the latter fraction being from 1 to 35% by weight of the total filler content; the proportion of the filler fraction (b) in an outer surface layer of the molded article is enriched to at least 30% by weight with reference to the total mass of the filled matrix.

The need was therefore felt to obtain kitchen sinks having the combination of the following properties:
- high scratch resistance;
- improved resistance to discolouration, when subjected to hot/cold water thermal cycles;
- high crack resistance when subjected to hot/cold water thermal cycles;
- obtainable from moulding by casting of easily pumpable dispersions without dirtying the moulds.

The Applicant has surprisingly and unexpectedly found that by using in the dispersion of (meth)acrylic resins a filler formed by quartzes having irregular, i.e. broken, shapes, deriving from the milling and having a particular granulometric distribution, it is possible to obtain moulded articles having the above mentioned combination of properties.

The present invention proposes therefore moulded articles in accordance with claim 1, dispersions in accordance with claim 16, a process for the preparation of the moulded articles in accordance with claim 17, and the use of the moulded articles in accordance with claim 19.

In order to obtain the results of the present invention it is essential that the components B) and C) of the dispersion, i.e. the inorganic filler particles, derive from a milling operation, wherefore they have rough and irregular surfaces and show a friction higher than the case of rounded surfaces. The use of milled quartzes with irregular shapes is generally contraindicated for the preparation of dispersions having a high concentration of quartzes, since their moulding by casting (with and without pressure) is difficult, these dispersions being not very fluid due to the rough shape of the filler. When one succeeds in moulding said dispersions, the obtained manufactured articles show strips of material having a different composition or colouration, or a thickness discontinuity. Surprisingly the dispersions having a high quartz concentration of the present invention do not show these drawbacks: the Applicant has obtained this result by adding to dispersions with a high concentration of quartzes having an irregular shape and a high granulometry (0.07-2 mm, component B), limited amounts of milled quartzes and/or cristobalite having a very fine granulometry, from 0.1 to 30 µm (component C). In this way, the Applicant has found that the dispersion fluidity improves to such an extent to allow a moulding by casting without any difficulty, similar to that of the sinks obtained from dispersions having a high concentration of natural quartzes with a rounded shape. For the dispersion fluidity purposes, the quartzes and/or cristobalites having a fine granulometry are effective at low concentrations, in the range 3-12% by weight, preferably 6-10% by weight with respect to the total weight of the dispersion.

As examples of quartzes used in the milling to obtain the required granulometries, the natural cristobalite, the artificial cristobalite obtained by treatment of quartz sands in ovens at 1880°K can be mentioned; as regards the quartzes as such, the idiomorphic quartz (commonly named rocky crystal or quartzite), the block quartz (commonly named scrap quartz), rock crystal (if it is transparent it is called rhinestone), are used. It is not necessary that the quartzes used in the compositions of the present invention are pure, it is instead important that they have a hardness comparable with that of the natural quartz. Quartzes which have aluminum as impurity, up to 10% by weight, are particularly preferred, since being transparent or of light colour they are easily colourable.

The milled quartzes with rough shapes used in the present invention are coloured by the same methods and products used for rounded natural quartzes. Organic and/or inorganic dyes, optionally using binders, for example sodium silicate or a resin of acrylic, polyurethane, epoxide type, can be used.

By polymerization of component A) of the dispersion of the present invention, a matrix is obtained, named hereinafter binding resin, able to stably disperse inside itself the filler particles, i.e. components B) and C).

Said binding resin derives from the polymerization of at least one polymerizable liquid monomer, preferably selected from alkyl esters of the acrylic or methacrylic acid, wherein the alkyl group contains from 1 to 6 carbon atoms. Examples of said esters are methylmethacrylate (MMA), ethylmethacrylate, propylmethacrylate, butylmethacrylate, methylacrylate, ethylacrylate, butylacrylate, etc. Some vinyl monomers such as for example styrene, alpha-methyl-styrene, acrylonitrile, etc., can besides be used as polymerizable monomers. Methylmethacrylate alone or in admixture with the above mentioned monomers is particularly preferred, the amount of the optional comonomers being at most 50% by weight.

As viscosity modifiers of component A) of the dispersion, meth(acrylic) or vinyl homopolymers and/or copolymers are preferably used. In order to obtain considerable viscosity variations by a small use of modifier it is suitable to use components having a high molecular weight. Homopolymers or copolymers having a weight average molecular weight (M_{w}) between 20,000 and 1,000,000, preferably 50,000 and 500,000, are the most commonly used.

Examples of polymers to be used as viscosity modifiers are polymethylmethacrylate, polyethylmethacrylate, methylmethacrylate-methylacrylate copolymers, methylmethacrylate-styrene copolymers, methylmethacrylate-butylacrylate copolymers, methylmethacrylate-methacryloxypropyltrimethoxysilane copolymers, polystyrene, polyalphamethylstyrene, etc.

The viscosity modifier amount added to the monomer varies mainly in relation with the desired viscosity of the dispersion used for the sink moulding, which in its turn depends also on the total concentration of the silica. In general in the dispersions of the present invention, it ranges from 10 to 30% by weight of the polymerizable monomer.

Preferably in the preparation of the dispersion a syrup formed by a polymethylmethacrylate solution in methacrylate monomer is used as component A).

The obtained binding resin can be uncoloured or coloured by colouring pastes based on pigments or organic dyes dispersed by milling in plastifiers, such as for example n-hexyl-adipate, isononyl-adipate, in order to obtain in the final composition the desired colour shades. The prevalent part of the colouration is however brought from the coloured milled quartzes.

Besides the dispersion can contain an amount in the range 0.1-1% by weight of silanes and/or polysiloxanes, preferably silanes, as binding agents for the filler and to increase the filler dispersibility in component A). The use of said binding agents furthermore confers a higher mechanical resistance to the final manufactured article. Examples of silanes preferably used in the invention dispersions are: methyltriethoxysilane, methyltrimethoxysilane, vinyltriethoxysilane, trimethoxysilyl-propylmethacrylate. In order to facilitate the silanization, silanization catalysts in amounts from 0.01% to 1% by weight can be used. Among them isopropylamine, methacrylic acid, isopropylammonium acetate, isopropylammonium methacrylate, ammonium oleate, ammonium stearate, etc... can be mentioned. The catalyst can be prepared by direct addition of the organic acid to the ammonia or to the amine; such reaction can be carried out separately or directly in situ in the composition.

The dispersion can contain amounts in the range 0.15-0.5% by weight of crosslinking agents, preferably based on acrylic or methacrylic monomers, such as for example tetraethylenglycoldimethacrylate (TEGDM) or ethylenglycoldimethacrylate (EGDM), etc.

Optionally the dispersion contains releasing agents such as stearic acid, zinc stearate, in amounts equal to 0.1-0.5% by weight.

Besides small amounts of optional components, each in amounts equal to 0.1-0.5% by weight referred to 100 parts by weight of the dispersion can be added to the dispersion:
- thixotropic agents to stabilize the viscosity, such as for example the commecial product BYK® 410, constituted by a modified urea solution in N-methylpyrrolidone or a very fine and light amorphous silica, HDK® H 20 type, by Wacker Chemie;
- antifoam, preferably non silicone agents, such as for example the commercial product BYK® A 515;
- wetting agents, i.e. chemical compounds having the property to lower the surface tension of the dispersion. Surfactants containing ethoxy or propoxy groups, such as ethoxylated alkylphenols, sulphonated agents, alkyl sulphates, alkylammonium phosphates and phosphonates, wherein the alkyl group has up to 20 carbon atoms, phosphoric esters, etc., can be mentioned. The commercial product BYK® W 968 can for example be mentioned.

The dispersion in order to be polymerized is added of a peroxidic catalyst, for example benzoylperoxide, t-butylcyclohexylperoxycarbonate, in an amount in the range 0.1-2% by weight referred to 100 parts by weight of the dispersion.

A preferred composition according to the present invention comprises as component A) an organic liquid based on methylmethacrylate containing as viscosity modifiers PMMA and amorphous silica, for example of HDK^{R} H 20 type, the above mentioned crosslinking agents and silanes, components B) and C). Antifoam agents, conventional wetting agents and as viscosity stabilizer the commercial product BYK^{R} 410 can be added to the so obtained dispersion.

The process to obtain the above defined moulded articles, substantially comprising a first step directed to the preparation of the dispersion, preferably methacrylic, having a high filler content and a second step of the moulding of the dispersion to obtain the finished manufactured articles.

A base essentially formed by component A), the above mentioned chemicals and the milled quartzes having a fine granulometry, 0.1-30 *µ*m (component C) is prepared in an equipment having a high milling capacity, for example a ball mill. The base is stirred until obtaining a complete mixing of the components and let stay preferably for about 12 hours before being used for the subsequent mixing with the milled quartzes of high granulometry, 0.07-2 mm (component B). The dispersion is then ready to be catalyzed and introduced in the moulds to be polymerized or fed into the suitable containers for storage.

Before moulding, the dispersion is fed with a peroxidic catalyst, selected from those above mentioned, maintaining the dispersion under vacuum for the period of time sufficient to eliminate all the gases contained in the dispersion.

Moulding is carried out under a pressure of 1-6 atmospheres and at a temperature between 30° and 110°C, upon optional addition of releasing agents, as above defined. The dispersion is injected into the moulds, operating so that on the visible side an accumulation of quartzes forms. This is obtained by maintaining the visible side of the manufactured article parallel to the ground thus causing a decantation and consequently an accumulation of quartzes on the visible side.

The moulded articles of the present invention are therefore obtainable from moulding by casting of easily pumpable dispersions without moulds are dirtied. Besides the finished piece is easily releasable, therefore there is a reduction of the waste pieces.

The obtained moulded articles do not show a tendency to discolouration and are not scratched by the iron or steel articles used in kitchen, even maintaining a possibility of total cleaning. In particular the sinks of the invention have an exceptional colouration stability wherefore they resist thousands of cycles of temperature variation carried out according to the EN 13310 method (see the Examples).

The visible surfaces of the manufactured articles can be obtained in an opaque or glossy form depending on the thermal cycle used in the moulding. In both cases the temperature of the mould in contact with the visible side must be higher than that of the mould in contact with the back part. In particular, when glossy surfaces are desired, it is necessary that the difference of temperature between the mould in contact with the visible side and the mould in contact with the back surface is much higher with respect to the case of opaque surfaces.

The moulded articles of the invention are usable as sinks, kitchen work tops, hobs, etc.

The present invention will be better illustrated by the following Examples which have a merely indicative purpose but not limitative of the scope of the invention itself.

### EXAMPLES

### EXAMPLE 1

### Preparation of the base

1,371 Kg of methyl methacrylate monomer and 300 Kg of powder of a methylmethacrylate copolymer having a low content of acrylic esters (3-5% by weight) used for the preparation of transparent sheets, are fed in a ball mill having a capacity of 10 m³. The mill is run for some hours until the dissolution of the polymer in the monomer is obtained. Then further 1,000 kg of methacrylic monomer and additional 300 kg of copolymer are added. Once the polymer dissolution is ended, it is added:
- 600 Kg of a very fine cristobalite (component C) with average particle granulometry in the range 9-11 µm indicated as B2500;
- 30 Kg of tetraethylenglycoldimethacrylate (TEGDM), 20 Kg of ethylenglycoldimethacrylate (EGDM) as crosslinking agents;
- 20 Kg of silane trimethoxysilyl-propylmethacrylate as binding agent;
- 50 Kg of a very fine and light amorphous silica HDK H 20 type used as thixotropic agent.

One proceeds in mixing and silanization is made easier by adding the following silanization catalysts: 1.5 Kg of isopropylamine and 1.7 Kg of methacrylic acid. At last 6 kg of zinc stearate acting as releasing agent are added. The mixture is left under stirring and it is maintained until complete silanization (about 12 hour).

### Preparation of the dispersion

The base prepared as above indicated is transferred into a 10 m³ steel reactor equipped with stirrer and gate blades. 5,400 kg of a milled quartz, impure of aluminum up to 7% extracted by quarry, having 0.1-0.5 mm sizes (component B) are added thereto. The quartz is white coloured by a treatment with epoxy resins. The addition is gradually carried out under slow stirring so as to allow a perfect incorporation of the quartz. Then 600 kg of the same quartz but dark brown-coloured and 300 kg of the same quartz light brown-coloured are added. In order to obtain the oat colour shade a 20 kg mixture of a yellow and beige paste (Repi 85258 paste) is finally used.

The so prepared dispersion is ready to be catalyzed and injected into the moulds.

### Moulding of sinks

The prepared dispersion is catalyzed by 0.4-0.6% by weight of Perkadox 16 (bis-4-terbutyl-cyclohexylperoxydicarbonate) and injected under pressure in a two-valves mould of a sink, taking care to introduce in the catalyzed mixture an amount between 0.1-0.3% by weight of a non silicone antifoam of the BYK® A 515 type and a similar amount of a wetting agent BYK® W 968 and of a thixotropic agent BYK® 410.

The mould is filled in less than one minute at the pressure of 3 bar. The mould is then heated according to the thermal cycle shown in Table 1:

**TABLE 1**

| Time (minutes) | Visible side temperature | Back side temperature |
|---|---|---|
| 0 | 35°C | 35°C |
| 0-27 | 80°C | 50°C |
| 27-47 | 100°C | 100°C |

The obtained sink shows an opaque surface

### Sink characterization

### Resistance test to thermal cycles

The test is carried out according to the European method 13310 (prEN 13310). This method includes the following tests:
- Water drainage
- Resistance to dry heating
- Resistance to thermal cycles
- Resistance to chemical and staining agents
- Surface stability
- Stability to the load
- Flow rate of the upper discharge

In particular the resistance to thermal cycles implies the feeding, by a pipe placed at no more than 80 mm from the sink bottom, of hot water at 90°C for a time of 90 seconds with a 0.1 l/sec flow; stopping the water feeding for 30 sec and feeding then for 90 seconds cold water at 15°C with the same flow intensity. The procedure considers to uninterruptedly carry out 1,000 cycles of this type.

All the tests indicated in the method are overcome: substantial discolouration phenomena and cracks are not noticed.

Another sink obtained by using the process described in the Example is subjected to 2,000 cycles according to the thermal cycle indicated in the European method 13310.
Also in this case substantial discolouration phenomena and craks are not noticed. This result is particularly meaningful since it shows that the sinks obained from the dispersions of the invention resist also to a clearly higher number of cycles than that considered by the European method 13310, without noticing substantial discolouration phenomena.

### Scratch test

The sink is strongly scratched by a steel knife.
Blackening marks are not noticed either on the just prepared sink, or on the sink subjected to both the above indicated thermal cycles.

### EXAMPLE 2 (comparative)

One operates as in Example 1 but omitting in the base preparation the addition of the cristobalite particles having a fine granulometry (component C). Besides component B) having the same sizes and the same colour shades of Example 1 is used, but with the difference that in this case the fed quartzes are not milled and have therefore rounded edges. The component B) amount is equal to the sum of components B) and C) of Example 1.

A sink is moulded by the process described in Example 1.

### Sink characterization

The sink is strongly scratched by a steel knife: no blackening marks are noticed.

The sink is subjected to 2,000 cycles of hot and cold water according to the thermal cycles of the European method indicated in Example 1.
Remarkable phenomena of colour loss are noticed in this case.

### EXAMPLE 3 (comparative)

One operates as in Example 1 omitting in the base preparation the addition of the cristobalite particles having a fine granulometry (component C). In the dispersion preparation a component B) with the same properties as that of Example 1 is used, in an amount equal to the sum of components B) and C) of Example 1.

A sink is moulded by the process described in Example 1.

### Sink characterization

It is noticed that the material fed to the mould appears not very homogeneous and therefore not very suitable to moulding.

The sinks obtained by moulding show unhomogenous strips both as for colour and composition is concerned, therefore they cannot be commercialized.

### EXAMPLE 4

One proceeds as in Example 1 using in the base preparation 1,900 kg of methylmethacrylate monomer and 481 kg of methylmethacrylate copolymer as defined in Example 1, divided in 2 subsequent additions.

In the dispersion preparation 5,700 kg of white quartz of the same quality and colouration of Example 1 have been added. In order to obtain the desired white colour, 80 kg of a Repi 18334 white paste are added.

A sink is moulded by the process described in Example 1.

### Sink characterization

The sink is strongly scratched by a steel knife: no blackening marks are noticed.

The sink is subjected to hot and cold water according to thermal cycles of the European method indicated in

### Example 1.

Also in this case no substantial discolouration phenomena and cracks are noticed.

### EXAMPLE 5

### Preparation of the base

One operates as in Example 1, but using 726 kg of C).

### Preparation of the dispersion

The prepared base is fed into a 10 m³ steel reactor equipped with stirrer and gate blade anchor.
It is added as component B):
- 2223 Kg of milled and white coloured mineral quartz having 0.1-0.3 mm sizes;
- 1729 Kg of milled and white coloured mineral quartz having 0.1-0.5 mm sizes;
- 2223 Kg of milled and black coloured mineral quartz having 0.1-0.3 mm sizes.
In order to obtain the desired ambergrey colour, 20 kg of a Repi 15176 black paste are added.

One proceeds in the dispersion preparation and in the moulding as described in Example 1. The mould is then heated according to the thermal cycle shown in Table 2:

**TABLE 2**

| Time (minutes) | Visible side temperature | Back side temperature |
|---|---|---|
| 0 | 58°C | 38°C |
| 0-20 | 95°C | 37°C |
| 20-35 | 100°C | 100°C |

The obtained sinks show a glossy surface.

### Sink characterization

The sink is strongly scractched by a steel knife: no blackening marks are noticed.

The sink is subjected to hot and cold water according to the thermal cycles of the European method indicated in Example 1.
Also in this case no substantial discolouration phenomena and cracks are noticed.

## Claims

1. Moulded articles based on (meth)acrylic resins having a high content of milled quartzes, said articles being obtainable by moulding in the presence of a peroxide catalyst the following dispersions comprising:
A) from 20% to 35% by weight of an organic liquid formed of at least a polymerizable monomer selected from alkyl esters of the acrylic or methacrylic acid, where the alkyl group contains from 1 to 6 carbon atoms, and one or more viscosity modifiers in an amount from 10 to 30% by weight, preferably 15-25% by weight with respect to the amount of polymerizable monomer;
B) from 55% to 72% by weight, of milled and coloured quartzes having an average size from 0.07 to 2 mm, preferably from 0.1 to 0.5 mm;
**characterized in that** said dispersions further comprise
C) from 3 to 12% by weight of milled quartzes and/or cristobalites having an average size from 0.1 to 30 µm.

2. Moulded articles according to claim 1 , wherein the used quartzes are selected from: natural cristobalite, artificial cristobalite obtained by treatment of quartz sands in ovens at 1880°K, idiomorphic quartz, solid quartz, rock crystal.

3. Moulded articles according to claims 1-2, wherein the quartzes of component B) are coloured with organic and/or inorganic dyes, optionally using binders.

4. Moulded articles according to claim 1 wherein the polymerizable liquid monomer is selected from: methylmethacrylate, ethylmethacrylate, propylmethacrylate, butylmethacrylate, methylacrylate, ethylacrylate, butylacrylate, optionally in admixture with vinyl polymerizable monomers, preferably styrene, alpha-methyl-styrene, acrylonitrile; the amount of the optional comonomers being at most 50% by weight.

5. Moulded articles according to claims 1-4 wherein the viscosity modifiers of the component A) are (meth)acrylic or vinylic hompolymers and/or copolymers.

6. Moulded articles according to claim 5 wherein the viscosity modifiers of the component A) are selected from: polymethylmethacrylate, polyethylmethacrylate, methylmethacrylate-methylacrylate copolymers, methylmethacrylate-styrene copolymers, methylmethacrylate-butylacrylate copolymers,methylmethacrylate-methacryloxypropyltrimethoxysilane copolymers, polystyrene, polyalphamethylstyrene.

7. Moulded articles according to claim 6 wherein component A) is a polymethylmethacrylate solution in methacrylate monomer.

8. Moulded articles according to claims 1-7 wherein the component A) is coloured with dyeing pastes based on pigments or organic dyes.

9. Moulded articles according to claims 1-8 wherein the dispersion contains an amount in the range 0.1 and 1% by weight of silanes and/or polysiloxanes, preferably silanes.

10. Moulded articles according to claim 9 wherein silanes are selected from: methyltriethoxysilane, methyltrimethoxysilane, vinyltriethoxysilane, trimethoxysilyl-propylmethacrylate.

11. Moulded articles according to claims 1-10 wherein the dispersion contains amounts in the range 0.15 and 0.5% by weight of crosslinking agents, preferably based on acrylic or methacrylic monomers, such as tetraethylenglycoldimethacrylate, ethylenglycoldimethacrylate, optionally releasing agents, preferably stearic acid, zinc stearate.

12. Moulded articles according to claims 1-10 wherein the dispersion contains the following optional components, each in amounts equivalent to 0.1-0.5% by weight referred to 100 parts by weight of dispersion:
- thixotropic agents;
- antifoam agents;
- wetting agents.

13. Moulded articles according to claims 1-12, wherein the dispersion is added with an amount in the range 0.1-2% by weight referred to 100 parts by weight of dispersion of a peroxidic catalyst, preferably selected among benzoylperoxide, t-butylcyclohexylperoxycarbonate.

14. Moulded articles according to claim 13 wherein the dispersion contains as component A) an organic liquid based on methylmethacrylate monomer containing polymethyl methacrylate as viscosity modifier, amorphous silica as thixotropic agent, crosslinking agents, silanes, components B) and C).

15. Moulded articles according to claims 1-14 having a glossy or mat surface.

16. Polymerizable dispersions comprising:
A) from 20% to 35% by weight of an organic liquid formed of at least a polymerizable monomer selected from alkyl esters of the acrylic or methacrylic acid, where the alkyl group contains from 1 to 6 carbon atoms, and of one or more viscosity modifiers in an amount from 10 to 30% by weight, preferably 15-25% by weight with respect to the amount of polymerizable monomer;
B) from 55% to 72% by weight, of milled and coloured quartzes having an average size from 0.07 to 2 mm, preferably from 0.1 to 0.5 mm;
**characterized in that** said dispersions further comprise
C) from 3 to 12% by weight of milled quartzes and/or cristobalites having an average size from 0.1 to 30 µm.

17. A process for the preparation of the moulded articles according to claims 1-15, comprising:
- a first step for the preparation of the dispersion wherein a base is prepared, formed of component A) and component C) ; the base stirred until obtaining a complete mixing of the components and let stay preferably for about 12 hours before being used for the subsequent mixing with component B); and
- a second step for moulding the dispersion additioned with a peroxidic catalyst.

18. A process for the preparation of the moulded articles according to claim 17 wherein moulding is carried out under a pressure of 1-6 atmospheres and at a temperature between 30 and 110°C.

19. Use of the moulded articles of claims 1-15 as sinks, kitchen work tops, hobs.

## Patentansprüche

1. Formkörper auf Basis von (Meth)acrylharzen mit einem hohen Gehalt an gemahlenen Quarzen, wobei der Formkörper erhältlich ist durch Formen in Anwesenheit eines Peroxidkatalysators der folgenden Dispersionen umfassend:
A) 20 Gew.-% bis 35 Gew.-% einer organischen Flüssigkeit gebildet aus mindestens einem polymerisierbaren Monomer ausgewählt aus Alkylestern von Acryl- oder Methacrylsäure, wobei die Alkylgruppe 1 bis 6 Kohlenstoffatome enthält, und einem oder mehreren Viskositätsmodifizierungsmitteln in einer Menge von 10 bis 30 Gew.-%, vorzugsweise 15 bis 25 Gew.-%, bezüglich der Menge von polymerisierbarem Monomer,
B) 55 Gew.-% bis 72 Gew.-% gemahlene und gefärbte Quarze mit einer durchschnittlichen Größe von 0,07 bis 2 mm, vorzugsweise 0,1 bis 0,5 mm,
**dadurch gekennzeichnet, dass** die Dispersionen ferner umfassen
C) 3 bis 12 Gew.-% gemahlene Quarze und/oder Cristobalite mit einer durchschnittlichen Größe von 0,1 bis 30 µm.

2. Formkörper nach Anspruch 1, wobei die verwendeten Quarze ausgewählt sind aus natürlichem Cristobalit, künstlichem Cristobalit erhalten durch Behandlung von Quarzsanden in Öfen bei 1.880°K, idiomorphem Quarz, Festquarz, Bergkristall.

3. Formkörper nach den Ansprüchen 1 bis 2, wobei die Quarze von Komponente B) mit organischen und/oder anorganischen Farbstoffen gefärbt sind, wobei gegebenenfalls Bindemittel verwendet werden.

4. Formkörper nach Anspruch 1, worin das polymerisierbare flüssige Monomer ausgewählt ist aus Methylmethacrylat, Ethylmethacrylat, Propylmethacrylat, Butylmethacrylat, Methylacrylat, Ethylacrylat, Butylacrylat, gegebenenfalls in Mischung mit polymerisierbaren Vinylmonomeren, vorzugsweise Styrol, α-Methylstyrol, Acrylnitril, wobei die Menge der optionalen Comonomeren höchstens 50 Gew.-% beträgt.

5. Formkörper nach den Ansprüchen 1 bis 4, wobei die Viskositätsmodifizierungsmittel der Komponente A) (Meth)acryl- oder Vinylhomopolymere und/oder -copolymere sind.

6. Formkörper nach Anspruch 5, worin die Viskositätsmodifizierungsmittel der Komponente A) ausgewählt sind aus Polymethylmethacrylat, Polyethylmethacrylat, Methylmethacrylat-Methylacrylat-Copolymeren, Methylmethacrylat-Styrol-Copolymeren, Methylmethacrylat-Butylacrylat-Copolymeren, Methylmethacrylat-Methacryloxypropyltrimethoxysilan-Copolymeren, Polystyrol, Poly-□-methylstyrol.

7. Formkörper nach Anspruch 6, worin die Komponente A) eine Polymethylmethacrylat-Lösung in Methacrylatmonomer ist.

8. Formkörper nach den Ansprüchen 1 bis 7, wobei die Komponente A) mit Farbpasten auf Basis von Pigmenten oder organischen Farbstoffen gefärbt ist.

9. Formkörper nach den Ansprüchen 1 bis 8, wobei die Dispersion eine Menge im Bereich von 0,1 bis 1 Gew.-% an Silanen und/oder Polysiloxanen, vorzugsweise Silanen, enthält.

10. Formkörper nach Anspruch 9, wobei Silane ausgewählt sind aus Methyltriethoxysilan, Methyltrimethoxysilan, Vinyltriethoxysilan, Trimethoxysilylpropylmethacrylat.

11. Formkörper nach den Ansprüchen 1 bis 10, wobei die Dispersion Mengen im Bereich von 0,15 bis 0,5 Gew.-% an Vernetzungsmitteln, vorzugsweise auf Basis von Acryl- oder Methacrylmonomeren, wie Tetraethylenglycoldimethacrylat, Ethylenglycoldimethacrylat, und gegebenenfalls Trennmitteln, vorzugsweise Stearinsäure, Zinkstearat, enthält.

12. Formkörper nach den Ansprüchen 1 bis 10, wobei die Dispersion die folgenden optionalen Komponenten, jeweils in Mengen äquivalent mit 0,1 bis 0,5 Gew.-%, bezogen auf 100 Gew.-Teile der Dispersion, enthält:
- Thixotropiermittel,
- Schaumverhütungsmittel,
- Benetzungsmittel.

13. Formkörper nach den Ansprüchen 1 bis 12, wobei zur Dispersion eine Menge im Bereich von 0,1 bis 2 Gew.-%, bezogen auf 100 Gew.-Teile der Dispersion, eines Peroxidkatalysators zugesetzt wird, bevorzugt ausgewählt aus Benzoylperoxid und tert.-Butylcyclohexylperoxycarbonat.

14. Formkörper nach Anspruch 13, worin die Dispersion als Komponente A) eine organische Flüssigkeit auf Basis von Methylmethacrylatmonomer enthaltend Polymethylmethacrylat als Viskositätsmodifizierungsmittel, amorphe Kieselsäure als Thixotropiermittel, Vernetzungsmittel, Silane, Komponenten B) und C) enthält.

15. Formkörper nach den Ansprüchen 1 bis 14 mit einer glänzenden oder matten Oberfläche.

16. Polymerisierbare Dispersionen umfassend:
A) 20 Gew.-% bis 35 Gew.-% einer organischen Flüssigkeit gebildet aus mindestens einem polymerisierbaren Monomer ausgewählt aus Alkylestern von Acryl- oder Methacrylsäure, wobei die Alkylgruppe 1 bis 6 Kohlenstoffatome enthält, und einem oder mehreren Viskositätsmodifizierungsmitteln in einer Menge von 10 bis 30 Gew.-%, vorzugsweise 15 bis 25 Gew.-%, bezüglich der Menge an polymerisierbarem Monomer,
B) 55 Gew.-% bis 72 Gew.-% gemahlene und gefärbte Quarze mit einer durchschnittlichen Größe von 0,07 bis 2 mm, vorzugsweise 0,1 bis 0,5 mm,
**dadurch gekennzeichnet, dass** die Dispersionen ferner umfassen
C) 3 bis 12 Gew.-% gemahlene Quarze und/oder Cristobalite mit einer durchschnittlichen Größe von 0,1 bis 30 µm.

17. Verfahren zur Herstellung der Formkörper nach den Ansprüchen 1 bis 15 umfassend:
- einen ersten Schritt zur Herstellung der Dispersion, wobei eine Basis hergestellt wird, gebildet aus der Komponente A) und Komponente C), wobei die Basis gerührt wird, bis eine vollständige Mischung der Komponenten erhalten wird, und vorzugsweise für etwa 12 h vor der Verwendung für die anschließende Mischung mit Komponente B) stehengelassen wird, und
- einen zweiten Schritt zum Formen der Dispersion, der ein Peroxidkatalysator zugesetzt worden ist.

18. Verfahren zur Herstellung der Formkörper nach Anspruch 17, worin die Formung unter einem Druck von 1 bis 6 Atmosphären und bei einer Temperatur zwischen 30 und 110°C durchgeführt wird.

19. Verwendung der Formkörper der Ansprüche 1 bis 15 als Ausgussbecken, Küchenarbeitsauflagen und Kochfelder.

## Revendications

1. Articles moulés à base de résines (méth)acryliques ayant une teneur élevée en quartz broyé, lesdits articles pouvant être obtenus par moulage, en présence d'un catalyseur peroxyde, des dispersions suivantes comprenant :
A) de 20 % à 35 % en poids d'un liquide organique formé d'au moins un monomère polymérisable choisi parmi les esters d'alkyle de l'acide acrylique ou méthacrylique, où le groupe alkyle contient de 1 à 6 atomes de carbone, et un ou plusieurs agents modifiant la viscosité en une quantité de 10 à 30 % en poids, de préférence 15 à 25 % en poids par rapport à la quantité de monomère polymérisable ;
B) de 55 % à 72 % en poids de quartz broyé et coloré ayant une taille moyenne de particules de 0,07 à 2 mm, de préférence de 0,1 à 0,5 mm ;
**caractérisés en ce que** lesdites dispersions comprennent en outre
C) de 3 à 12 % en poids de quartz et/ou de cristobalite broyé ayant une taille moyenne de particules de 0,1 à 30 µm.

2. Articles moulés selon la revendication 1, dans lesquels le quartz utilisé est choisi parmi : la cristobalite naturelle, la cristobalite artificielle obtenue par traitement de sables de quartz dans des fours à 1 880°K, le quartz idiomorphe, le quartz solide, le cristal de roche naturelle.

3. Articles moulés selon les revendications 1 à 2, dans lesquels le quartz du composant B) est coloré par des colorants organiques et/ou inorganiques, en utilisant facultativement des liants.

4. Articles moulés selon la revendication 1, dans lesquels le monomère liquide polymérisable est choisi parmi : le méthacrylate de méthyle, le méthacrylate d'éthyle, le méthacrylate de propyle, le méthacrylate de butyle, l'acrylate de méthyle, l'acrylate d'éthyle, l'acrylate de butyle, éventuellement en mélange avec des monomères polymérisables vinyliques, de préférence le styrène, l'alpha-méthylstyrène, l'acrylonitrile; la quantité des comonomères facultatifs étant d'au plus 50 % en poids.

5. Articles moulés selon les revendications 1 à 4, dans lesquels les agents modifiants la viscosité du composant A) sont des homopolymères et/ou des copolymères (méth)acryliques ou vinyliques.

6. Articles moulés selon la revendication 5, dans lesquels les agents modifiants la viscosité du composant A) sont choisis parmi : le polyméthacrylate de méthyle, le polyméthacrylate d'éthyle, les copolymères de méthacrylate de méthyle-acrylate de méthyle, les copolymères de méthacrylate de méthyle-styrène, les copolymères de méthacrylate de méthyle-acrylate de butyle, les copolymères de méthacrylate de méthyle-méthacryloxypropyltriméthoxysilane, le polystyrène, le polyalphaméthylstyrène.

7. Articles moulés selon la revendication 6, dans lesquels le composant A) est une solution de polyméthacrylate de méthyle dans le méthacrylate monomère.

8. Articles moulés selon les revendications 1 à 7, dans lesquels le composant A) est coloré par des pâtes colorantes à base de pigments ou de colorants organiques.

9. Articles moulés selon les revendications 1 à 8, dans lesquels la dispersion contient de 0,1 à 1 % en poids de silanes et/ou de polysiloxanes, de préférence de silanes.

10. Articles moulés selon la revendication 9, dans lesquels les silanes sont choisis parmi : le méthyltriéthoxysilane, le méthyltriméthoxysilane, le vinyltriéthoxysilane, le méthacrylate de triméthoxysilyl-propyle.

11. Articles moulés selon les revendications 1 à 10, dans lesquels la dispersion contient de 0,15 et 0,5 % en poids d'agents de réticulation, de préférence à base de monomères acryliques ou méthacryliques, tels que le diméthacrylate de tétraéthylèneglycol, le diméthacrylate d'éthylèneglycol, éventuellement des agents de démoulage, de préférence l'acide stéarique, le stéarate de zinc.

12. Articles moulés selon les revendications 1 à 10, dans lesquels la dispersion contient les composants facultatifs suivants, chacun à raison de 0,1 à 0,5 % en poids par rapport à 100 parties en poids de dispersion :
- des agents thixotropes ;
- des agents anti-moussants ;
- des agents mouillants.

13. Articles moulés selon les revendications 1 à 12, dans lesquels la dispersion contient en outre de 0,1 à 2 % en poids, par rapport à 100 parties en poids de dispersion, d'un catalyseur peroxyde, choisi de préférence parmi le peroxyde de benzoyle et le peroxycarbonate de t-butylcyclohexyle.

14. Articles moulés selon la revendication 13, dans lesquels la dispersion contient, en tant que composant A), un liquide organique à base de méthacrylate de méthyle monomère contenant du polyméthacrylate de méthyle en tant qu'agent modifiant la viscosité, de la silice amorphe en tant qu'agent thixotrope, des agents de réticulation, des silanes et les composants B) et C).

15. Articles moulés selon les revendications 1 à 14, ayant une surface brillante ou mate.

16. Dispersions polymérisables comprenant :
A) de 20 % à 35 % en poids d'un liquide organique formé d'au moins un monomère polymérisable choisi parmi les esters d'alkyle de l'acide acrylique ou méthacrylique, où le groupe alkyle contient de 1 à 6 atomes de carbone, et d'un ou plusieurs agents modifiant la viscosité en une quantité de 10 à 30 % en poids, de préférence de 15 à 25 % en poids par rapport à la quantité de monomère polymérisable ;
B) de 55 % à 72 % en poids, de quartz broyé et coloré ayant une taille moyenne de particules de 0,07 à 2 mm, de préférence de 0,1 à 0,5 mm ;
**caractérisées en ce que** lesdites dispersions comprennent en outre
C) de 3 à 12 % en poids de quartz et/ou de cristobalite broyé ayant une taille moyenne de 0,1 à 30 µm.

17. Procédé de préparation des articles moulés selon les revendications 1 à 15, comprenant :
- une première étape de préparation de la dispersion dans laquelle une base est préparée, formée d'un composant A) et d'un composant C) ; la base est agitée jusqu'à obtention d'un mélange complet des composants et laissée au repos de préférence pendant environ 12 heures avant d'être utilisée pour le mélange ultérieur avec le composant B) ; et
- une seconde étape de moulage de la dispersion additionnée d'un catalyseur peroxyde.

18. Procédé de préparation des articles moulés selon la revendication 17, dans lequel le moulage est effectué sous une pression de 1 à 6 atmosphères et à une température comprise entre 30 et 110°C.

19. Utilisation des articles moulés selon les revendications 1 à 15, en tant qu'éviers, plans de travail de cuisine, plaques de cuisinière.
